# EUROPEAN PATENT SPECIFICATION

(11) **EP 0 553 227 B1**
(45) Date of publication and mention of the grant of the patent: **15.06.1994**
(21) Application number: 91919308.6
(22) Date of filing: 17.10.1991
(51) Int. Cl.: A01K 97/01

(54) **FISHING RIG**
TAKELAGE ZUM ANGELN
CANNE A PECHE

(30) Priority: 17.10.1990 CA 2027879
(43) Date of publication of application: 04.08.1993
(73) Proprietor: DEBRECZENI, Joe, Brossard, Quebec J4W 1T8 (CA)
(72) Inventor: DEBRECZENI, Joe, Brossard, Quebec J4W 1T8 (CA)
(74) Representative: Hirsch, Marc-Roger
(86) International application number: CA9100371
(87) International publication number: WO9206593

(56) References cited:
- US-A- 2 565 379
- US-A- 2 970 400
- US-A- 3 824 730
- US-A- 3 888 035
- US-A- 4 373 287
- US-A- 4 837 965

## Description

### FIELD OF THE INVENTION

The present invention relates to a fishing rig of the type which is positioned over a fishing hole cut through an ice surface and which provides a signal when a fish strikes the line.

### BACKGROUND OF THE INVENTION

It is common in ice fishing to provide, adjacent a hole cut through the ice surface, a support on which a fishing rod is positioned. It is also common to provide, on such support, an indicator, such as a flag, which is actuated when the bait has been hooked in order to draw the fisherman's attention.

The use of signaling flags, in combination with fishing rigs, is known in the art; for example, United States patent nos. 3,824,730 issued July 23, 1974 to Johnson and 4,373,287 issued February 15, 1983 to Grahl describe fishing rod holders of the type having a signaling means to indicate a pull on the line. However, none of these devices uses the line for directly triggering the mechanism that holds the flag. Obviously, a pull exerted by a fish is first sensed by the fishing line and, consequently, triggering mechanisms ought to be actuated as soon as the line is tugged.

In some fishing rigs, the flag is raised only when the fishing rod has gone from a tip-up to a tip-down position adjacent the hole in the ice surface.

It has also been observed, in other fishing rigs, that a pull by a fish not only causes the pivotal movement of the fishing rod, but also of the entire rig including its supporting base. In cases where the ice hole is relatively large, the entire fishing rig may be lost through the hole.

### OBJECTSAND STATEMENT OF THE INVENTION

It is an object of the present invention to provide a fishing rig which overcomes the above problems.

It is an object of the present invention to provide a fishing rig where the pull caused by a fish tugging on a line is immediately sensed by a triggering mechanism to cause the immediate release of the flag.

The present invention therefore relates to a fishing rig which comprises:
- a base adapted to reside, when in use, atop a supporting surface, the base embodying a front portion and a rear portion;
- an upright mounted, when in use, to the front portion of the base and including a rearwardly extending oblique upper portion, defining a fulcrum point thereon;
- a tiltable fishing rod mounted, when in use, to the fulcrum point and defining first and second sections on either side of the fulcrum point, the first section including a line supporting pole and the second section including a handle and a line reel; the rod further including means for mounting the upper portion to the fulcrum point;
- a flag including a flexible staff having a lower end thereof mounted to the base;
- means adapted to reside , when in use, at the rear portion of the base for supporting the second section of the fishing rod in a tip-up position; and
- triggering means pivotally mounted to the upright, including line engaging means and flag engaging means adapted to contact the upper end of the staff, when in a flexed condition, whereby a pull on the line causes the triggering means to pivot to thus free the upper end of the staff.

This invention thus allows the flag to be raised even though the fishing rod, which is tiltably mounted on the upright has not moved to a tip-up position to a tip-down position because the pulling force was not sufficient to cause the fishing rod to tilt.

Furthermore, the present invention provides a fishing rig where its upright is so structured that, with the fishing rod in its tip-down position, the pulling force is opposed by the structure of the upright thus preventing a tilting of the entire fishing rig.

In one form of the invention, the fishing rig is formed of a series of elements which may be dismounted and assembled so as to be easily portable and storable.

Further, the rig is so structured that it may be used with most of its components to define another embodiment wherein the fishing rod is suspended over the hole with a portion thereof extending through the hole and in the water.

The present invention therefore relates to a rig for fishing adjacent a hole cut through an ice surface, which comprises:
- base means adapted to reside, when in use, atop the ice surface;
- support means having one end mounted, when in use, to the base means and the opposite end adapted to extend over the hole;
- a fishing rod suspended, when in use, to the opposite end of the support means and - extending downwardly through the hole, the rod including a line supporting pole, a rotatable line reel and a handle; the line reel including a manually operatable lever;
- flag means including a flexible staff having a lower end thereof mounted to the base means; and
- flag triggering means pivotally mounted to the opposite end portion of the support means, the triggering means including: staff engaging means adapted to contact an opposite end of the staff, when in a flexed condition; and telescopic means having one end pivotally connected to the flag engaging means and the other end pivotally connected to the lever whereby a pulling force on the line causes the reel and the lever to rotate and, consequently, through the telescopic means, causes the engaging means to free the opposite end of the staff.

Other objects and further scope of applicability of the present invention will become apparent from the detailed description given hereinafter. It should be understood, however, that this detailed description, while indicating preferred embodiments of the invention, is given by way of illustration only, since various changes and modifications within the scope of the invention will become apparent to those skilled in the art.

### IN THE DRAWINGS

Figure 1 is a perspective view of a first embodiment of a fishing rig made in accordance with the present invention, shown in a tip-up position on an ice surface and located adjacent a hole cut through the ice;
Figure 2 is a side elevation thereof with the fishing rod in a tip-down position;
Figure 3 is a side exploded view showing the various components of the fishing rig;
Figure 4 is an enlarged side view, partly sectional, showing the triggering mechanism of the present invention;
Figure 5 is a top plan view of the base of the fishing rig;
Figure 6 is a perspective view of the fishing rig jammed in the ice hole;
Figure 7, which is illustrated on the same sheet as that showing figure 5, is a side view of another embodiment of a rig with the rod partly submerged through the ice hole;
Figure 8 is a view similar to figure 7 showing the rod being raised; and
Figure 9 is a cross-sectional view showing the connection of the rod support with the base.

### DESCRIPTION OF PREFERRED EMBODIMENT

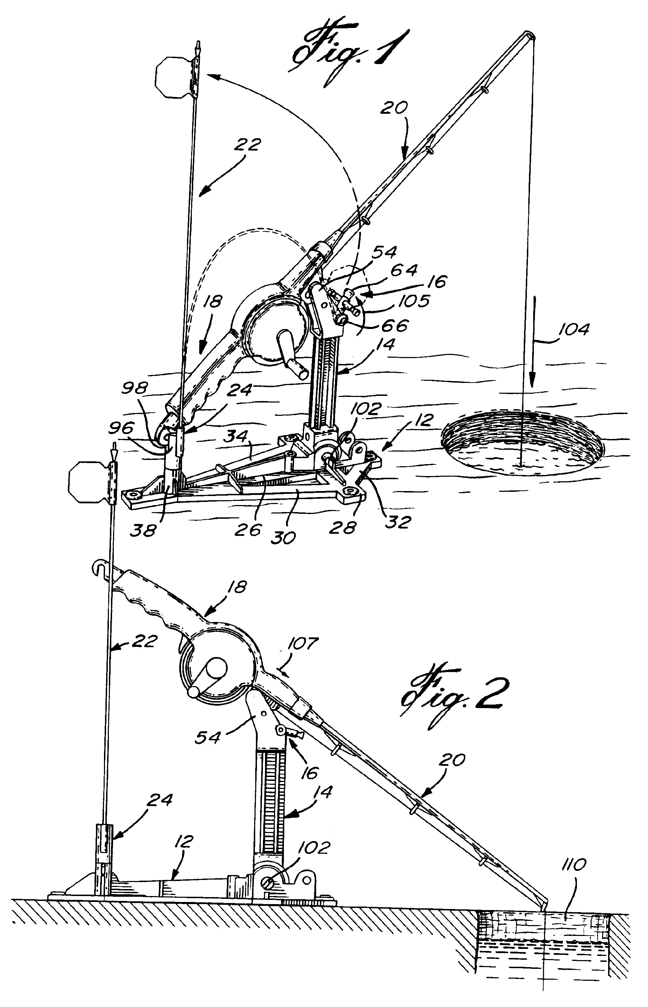

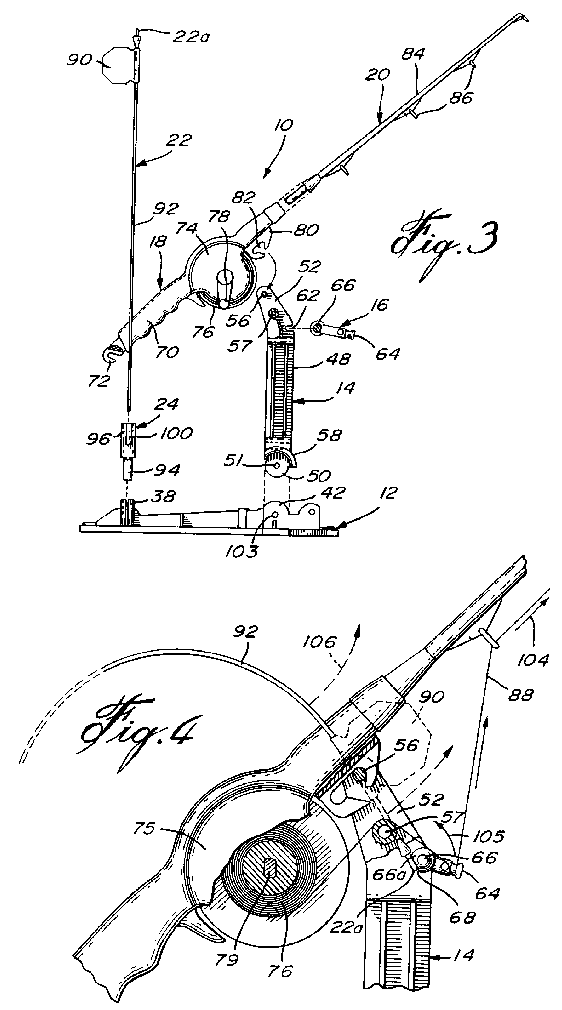

Referring to figures 1 and 2, the present invention concerns a fishing rig consisting of seven components including: a base 12, an upright 14, a triggering device 16, a fishing rod including a handle portion 18 and a pole portion 20, a flag with staff 22 and a fitting 24.

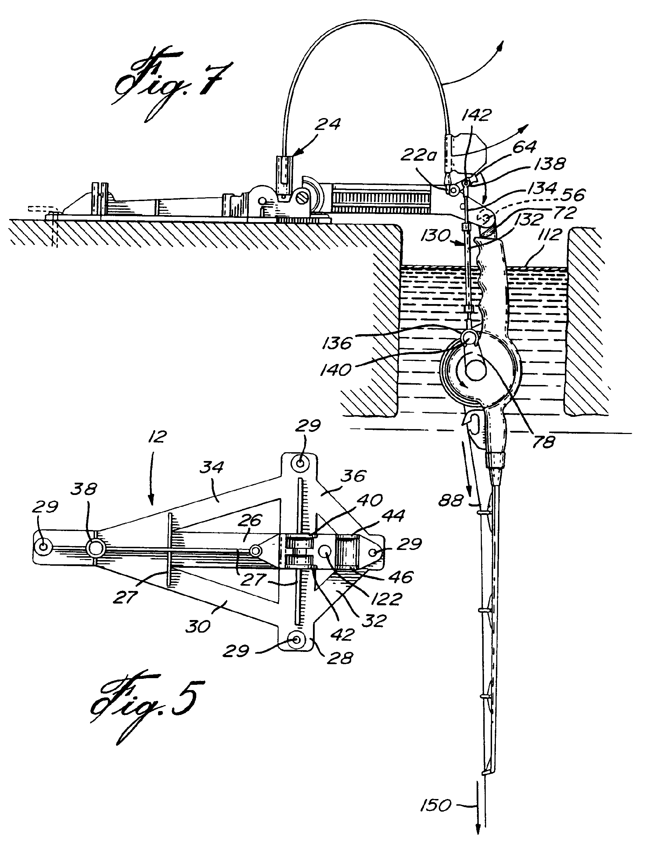

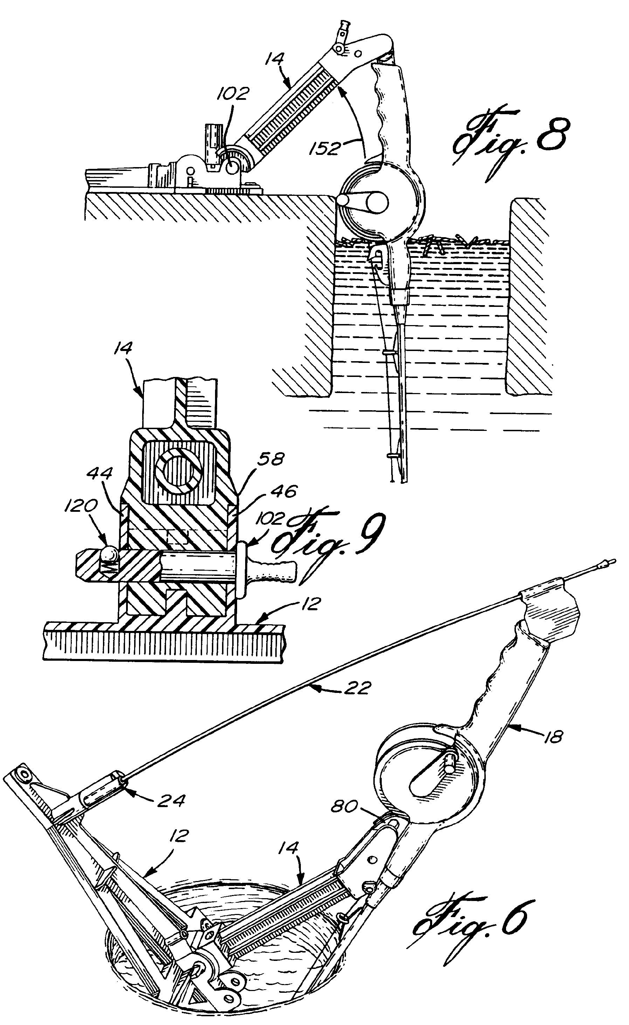

The base 12 (see figure 5) is a unitary plastic molded member consisting of a longitudinal central member 26 and of a cross member 28, both of which are reinforced by the presence of opposite oblique side members 30 and 32, 34 and 36. The rear of the base displays an upstanding cylindrical hollow portion 38 while the front of the base displays, on the central member 26, two successive pairs of ears 40, 42 and 44, 46. The bottom face of the central member 26 between the pairs of ears is concave as explained further hereinbelow. Members 26 and 28 each have reinforcing ribs 27 and their extremities each have a hole 29 allowing the base to be fixed to the ice surface or other supporting surface.

Referring to figure 3, the upright 14 comprises a vertical portion 48 with a rounded base 50 which is adapted to be received between the two ears 40 and 42 and on the concave lower surface therebetween on the base. The upper portion of the upright 48 is rearwardly oblique and is defined by a pair of spaced side members 52 and 54 defining a yoke. A pair of cross-pins 56 and 57 extends transversely between the two members 52 and 54. The lower end of the upright has two opposite rounded flanges 58 which are adapted to sit and ride on the upper rounded edges of the ears 40 and 42. The lower end of the oblique side members 52 and 54 displays a rounded recess 62 at the front thereof.

The triggering mechanism 16 is a T-shaped member 70 integrally formed, at its base, with a transverse pivot 66 having two grooved areas which are adapted to be fittingly inserted into the rounded recesses 62 of each member 52, 54 of the yoke. The opposite extremities of shaft 66 have a semi-spherical surface 66a; however, as as can be seen in figure 4, one extremity of this surface has a segmented portion 68, the function of which will be described hereinafter.

The handle portion 18 of the fishing rod includes a hand gripping section 70, having a hook-like extremity 72, and a housing 74 which is formed of opposite circular side extensions 75. A reel 76 is rotatably secured in housing 74 by means of a manual lever 78 which has a rectangular cross-member 79. Openings are provided in both circular side extensions of the housing 74 so that lever 78 may be located on either side (for left-handed or right-handed fishermen). Portion 18 of the handle also comprises a C-shaped catch 80 defining an open slot 82 in which is positioned the cross-pin 56 of the upright which acts as a fulcrum point when the fishing rod is placed on the upright.

The other portion 20 of the fishing rod comprises a standard pole 84 with circular rings 86 through which extends a fishing line 88, the pole being tight fitted in the extremity of the handle portion 18.

The flag 22 consists of a visual signaling element 90 adjacent its extremity 22a and of a flexible staff 92.

Fitting 24 comprises a cylindrical lower portion 94 which is adapted to be snuggly received in the hollow cylindrical extension 38 of the base. It further comprises, at the upper portion, two space side members 96 and 98 between which is adapted to sit the extremity 72 of the fishing rod. One side member 96 includes, on its outer wall, a cylindrical hollow housing 100 to receive the lower end of the flexible staff 92. Fitting 24 thus serves to support the flag as well as the fishing rod when in a tip-up position.

The assembly of the fishing rig is accomplished as follows. The upright 14 is positioned vertically with its base 50 inserted between the two supporting ears 40 and 42 of the base. A locking pin 102 (see figure 1) is inserted through an appropriate side opening 103 in each ear in registry with hole 51 of the upright (see figure 3). The fishing rod is then positioned so that its catch 80 engages the cross pin 56 of the upright (as shown in figure 4); with the fishing rod placed in its tip-up position, extremity 72 of the rod is received between the two sides members 96 and 98 of fitting 24. The lower end of the flag staff is fitted in the cylindrical housing 100. The flag staff is then flexed and its upper extremity 22a is located to abut the segmented portion 68 of the end surface 66a of pivot 66. Line 88 is then pulled away from the pole and loosely fitted around the head 64 of the T-shaped portion of the triggering device.

Referring to figure 4, whenever a pull is exerted on the line in the direction indicated by arrow 104, the triggering device 16 pivots about its axis 66 (as indicated by arrow 105). As the semi-spherical surface 66a, rotates, it slides under the staff extremity 22a thus releasing the staff to its normal vertical position (as indicated by arrow 106). Also, the line is freed from head 64.

As the pull becomes significant, the fishing rod pivots about axis 56 and adopts the position shown in figure 2 with its tip down over hole 110. In this position, cross-pin 56 now slides in the uppermost extremity of slot 82 of catch 80. The obliqueness of portion 54 relative to the main vertical portion of the upright 14 provides maximum resistance to the pull in the direction 107 (in figure 2). The opposing force is in line with the pulling force of the rod. If the upright were in a vertical position, there would be a tendency for the entire assembly to pivot with the possibility of the rod being unhooked and being pulled into the hole. On the other hand, with the arrangement shown in the drawings where the base is not secured to the ice surface, there is tendency of the assembly to be drawn or to slide on the ice surface to a position adjacent the hole. In cases where an important pull would cause the assembly to reach the position such as shown in figure 6, it can be seen that the particular structural supporting configuration of the rod to the upper part of the upright makes it difficult for the fishing rod to be removed from the upright. As shown in figure 6, a relatively large hole would be required for the entire fishing rig to be drawn underwater.

Another feature of the present invention resides in the particular construction of the base 12, which allows fishing to be carried out in the manner shown in figure 7. This may be preferred in cases where movement of the fishing rod in the water is desired to effect continuous breakage of the thin ice 112 being formed on the surface of the water. Still, in cases where there is not sufficient movement of the rod to cause ice breakage, the retrieval of the fishing rod (as indicated by arrow 152 in figure 8) by pivoting the upright 14 about pivot 102 will break the thin ice layer.

The upright is, in this case, positioned horizontally between the frontmost ears 44 and 46 of the base and is secured therebetween by means of a pin 102 with the opposite arcuate portions 58 resting on the corresponding upper edges of the ears (see figure 9). A ball-and-spring arrangement 120 may be used to secure the pin 102 in the assembly of the upright 14 to the base 12.

The base includes an opening 122 rearwardly of ears 44 and 46 so that the lower cylindrical portion 94 of fitting 24 may be received therein (see figure 7).

In this arrangement, all of the components of the embodiment illustrated in figures 1 to 6 are used; however, an additional member is required. Indeed, an elongate extension member 130 formed of two telescopically engaged members 132 and 134 is used. Each member has a C-shaped extremity 136, 138 for respectively engaging the cylindrical portion 140 of the lever 78 and one of the two side arms 142 of the T-shaped triggering device 16. In this embodiment, the engagement of the flag staff extremity 22a with the triggering device 16 is accomplished in the same manner as that described above with respect to figures 1 to 6. A pull on line 88 in the direction of arrow 150 causes the rotation of the lever 78 and, through its telescopic connecting member 130, the pivotal movement of device 16 which then triggers the release of staff 22 again in the same manner as that described above.

As illustrated in figure 8, retrieval of the fishing rod is accomplished by simply pivoting the upright 14 about pin 102 in the direction of arrow 152.

Although the invention has been described above with respect with two specific forms, it will be evident to a person skilled in the art that it may be modified and refined in various ways. For example, although not described, the base may be constructed in a manner that all of the other components of the rig may be snuggly received thereon. It is therefore wished to have it understood that the present invention should not be limited in scope, except by the terms of the following claims.

## Claims

1. A fishing rig comprising, in combination:
- base means (12) adapted to reside, when in use, atop a supporting surface, said base means embodying a front portion and a rear portion;
- upright means (14) mounted, when in use, to said front portion of said base means (12) and including a rearwardly extending oblique upper portion defining a fulcrum point thereon;
- a tiltable fishing rod (18,20) mounted, when in use, to said fulcrum point and defining first and second sections on either side of said fulcrum point, said first section including a pole (84) supporting a line (88); said second section including a handle (18) and a line reel (76); said rod further including means for mounting said upper portion to said fulcrum point;
- flag means (22) including a flexible staff (92) having a lower end thereof mounted to said rear portion of said base means;
- means (24) located at said rear portion of said base means (12) and for receiving the lower end of said flexible staff (92) and also for supporting said second section (18) of said fishing rod; and
- triggering means (16) pivotally mounted to said upright means (14), said triggering (16) means including line engaging means (64) and flag engaging means (68) adapted to contact an opposite end (22a) of said staff (92), when flexed, whereby a pulling force on said line causes said triggering means to pivot to thus free said opposite end of said staff.

2. A fishing rig as defined in claim 1, wherein said triggering means (16) consist of a body having:
a) a pivot axis (66) having, at one end thereof, surface means adapted to abuttingly contact said opposite end of said staff (92); and
b) a stem having one end integral with said axis and the opposite end (64) thereof freely receiving said line (88); said line (88) being freed from said opposite end when the pulling force on said line frees said abutting contact thereby causing pivotal movement of said axis and freeing said opposite end of said staff from said surface means.

3. A fishing rig as defined in claim 2, wherein said surface means is segmented with said opposite end of said staff contacting said segmented surface means.

4. A fishing rig as defined in claim 2 or 3, wherein said stem is T-shaped.

5. A fishing rig as defined in claim 2, wherein said triggering means is mounted at the base of said oblique upper portion of said upright means.

6. A fishing rig as defined in claim 5, wherein said oblique upper portion has the shape of a yoke.

7. A fishing rig as defined in claim 6, wherein said fulcrum point consists of a transverse pin extending in the upper portion of said yoke.

8. A fishing rig as defined in claim 6 or 7, further comprising a cross pin in said yoke to receive thereon said line extending between said reel and said triggering means.

9. A fishing rig as defined in claim 7, wherein said means for mounting said upper portion to said fulcrum point on said fishing rod consists of a C-shaped element receiving said transverse pin therein.

10. A fishing rig as defined in claim 1, comprising, at said rear portion of said base, a removable support to receive the lower end of said flexible staff.

11. A fishing rig as defined in claim 10, wherein said support comprises means to receive a rear end of said handle of said fishing rod.

12. A fishing rig as defined in claim 1, further comprising removable pivot means for engaging the lower end of said upright means to said front portion of said base.

13. A rig for fishing adjacent a hole cut through an ice surface comprising, in combination:
- base means (12) adapted to reside, when in use, atop said ice surface;
- support means (14) having one end mounted, when in use, to said base means (12) and the opposite end adapted to extend over said hole;
- a fishing rod suspended, when in use, to said opposite end of said support means and extending downwardly through said hole, said rod including a pole (84) supporting a line (88), a rotatable line reel (76) and a handle (18); said line reel (74) including a manually operatable lever (140);
- flag means (22) including a flexible staff (92) having a lower end thereof mounted to said base means; and
- flag triggering means (16) pivotally mounted to said opposite end portion of said support means (14), said triggering means (16) including: staff engaging means (68) adapted to contact an opposite end (22a) of said staff (92), when in a flexed condition; and extension means (130) having one end pivotally connected to said flag triggering means and the other end pivotally connected to said lever (140) whereby a pulling force on said line causes said reel and said lever to rotate and, consequently, through said extension means (130), causes said triggering means to free said opposite end (22a) of said staff.

14. A fishing rig as defined in claim 13, wherein said flag engaging means consist of (a) a pivot axis having, at one end thereof, surface means adapted to abuttingly contact said opposite end of said flag and (b) a stem having means receiving said one end of said telescopic means.

15. A fishing rig as defined in claim 14, wherein said surface means is segmented with said opposite end of said flag contacting said segmented surface means.

16. A fishing rig as defined in claim 13, wherein said opposite end of said support means has the shape of a yoke displaying a transverse pin therein.

17. A rig as defined in claim 16, wherein said handle of said fishing rod includes, at one end thereof, hook means adapted to be freely suspended from said transverse pin.

18. A fishing rig as defined in claim 13, further comprising removable pivot means for engaging said one end of said support means to said base means.

19. A fishing rig as defined in claim 13, further comprising means adapted to be mounted to said base means for receiving the lower end of said flag means.

## Patentansprüche

1. Angelausrüstung mit, in Kombination:
- Sockelmitteln (12), die dazu eingerichtet sind, in Gebrauch auf einer Stützfläche zu sitzen, und die einen vorderen Teil und einen hinteren Teil bilden,
- Pfostenmitteln (14), die im Gebrauch an dem vorderen Teil der Sockelmittel (12) montiert sind und einen sich nach hinten erstreckenden schrägen oberen Teil aufweisen, der einen Drehpunkt darauf definiert,
- einer kippbaren Angelrute (18, 20), die im Gebrauch an dem Drehpunkt montiert ist und erste und zweite Abschnitte auf beiden Seiten des Drehpunktes bildet, wobei der erste Abschnitt eine eine Schnur (88) tragende Stange (84) aufweist und der zweite Abschnitt einen Handgriff (18) und eine Schnur-Winde (76) aufweist, welche Rute weiterhin Mittel zum Montieren des oberen Teils an dem Drehpunkt aufweist,
- Flaggenmitteln (22) mit einem flexiblen Stab (92), der mit seinem unteren Ende an dem hinteren Teil der Sockelmittel montiert ist,
- Mitteln (24), die am hinteren Teil der Sockelmittel (12) angeordnet sind, und zur Aufnahme des unteren Endes des flexiblen Stabes (92) sowie zur Abstützung des zweiten Abschnitts (18) der Angelrute, und
- Auslösemitteln (16), die schwenkbar an den Pfostenmitteln (14) montiert sind und Schnur-Eingriffsmittel (64) und Flaggen-Eingriffsmittel (68) aufweisen, die dazu eingerichtet sind, mit einem entgegengesetzten Ende (22a) des Stabes (92) in Berührung zu kommen, wenn dieser gebogen ist, wodurch eine Zugkraft auf die Schnur ein Schwenken der Auslösemittel verursacht, um so das entgegengesetzte Ende des Stabes freizugeben.

2. Angelausrüstung nach Anspruch 1, bei der die Auslösemittel (16) aus einem Körper bestehen, der aufweist:
a) eine Schwenkachse (66), die an ihrem einen Ende Oberflächenmittel hat, die dazu eingerichtet sind, mit dem entgegengesetzten Ende des Stabes (92) in Anschlagsberührung zu kommen, und
b) einen Schaft, dessen eines Ende mit der Achse einstückig ist und dessen entgegengesetztes Ende (64) die Schnur (88) frei aufnimmt, wobei die Schnur (88) von dem entgegengesetzten Ende freigegeben wird, wenn die Zugkraft auf die Schnur die Anschlagsberührung aufhebt und dadurch die Schwenkbewegung der Achse und das Lösen des entgegengesetzten Endes des Stabes von den Oberflächenmitteln verursacht.

3. Angelausrüstung nach Anspruch 2, bei der die Oberflächenmittel segmentförmig sind, wobei das entgegengesetzte Ende des Stabes die segmentförmigen Oberflächenmittel berührt.

4. Angelausrüstung nach Anspruch 2 oder 3, bei der der Schaft T-förmig ist.

5. Angelausrüstung nach Anspruch 2, bei der die Auslösemittel an der Basis des schrägen oberen Teils der Pfostenmittel montiert sind.

6. Angelausrüstung nach Anspruch 5, bei der der schräge obere Teil die Form eines Joches hat.

7. Angelausrüstung nach Anspruch 6, bei der der Drehpunkt aus einem querverlaufenden Stift besteht, der sich im oberen Teil des Joches erstreckt.

8. Angelausrüstung nach Anspruch 6 oder 7, die weiterhin einen Querstift in dem Joch aufweist, um darauf die Schnur aufzunehmen, die sich zwischen der Winde und den Auslösemitteln erstreckt.

9. Angelausrüstung nach Anspruch 7, bei der die Mittel zum Montieren des oberen Teils an dem Drehpunkt an der Angelrute aus einem C-förmigen Element bestehen, in dem der querverlaufende Stift aufgenommen ist.

10. Angelausrüstung nach Anspruch 1, die am hinteren Teil der Basis einen lösbaren Halter zur Aufnahme des unteren Endes des flexiblen Stabes aufweist.

11. Angelausrüstung nach Anspruch 10, bei der der Halter Mittel zur Aufnahme eines hinteren Endes des Handgriffes der Angelrute auweist.

12. Angelausrüstung nach Anspruch 1, die weiterhin lösbare Zapfenmittel zum in Eingriff Bringen des unteren Endes der Pfostenmittel mit dem vorderen Teil des Sockels aufweist.

13. Ausrüstung zum Angeln an einem in eine Eisfläche geschnittenen Loch, mit, in Kombination:
- Sockelmitteln (12), die dazu eingerichtet sind, im Gebrauch auf der Eisfläche zu sitzen,
- Haltemitteln (14), die im Gebrauch mit einem Ende an den Sockelmitteln (12) montiert sind und deren entgegengesetztes Ende dazu eingerichtet ist, sich über das Loch zu erstrecken,
- einer Angelrute, die im Gebrauch an dem entgegengesetzten Ende der Haltemittel aufgehängt ist und sich nach unten durch das Loch erstreckt, welche Rute eine eine Schnur (88) tragende Stange (84), eine drehbare Schnur-Winde (76) und einen Handgriff (18) aufweist, wobei die Schnur-Winde (74) einen handbetätigbaren Hebel (140) aufweist,
- Flaggenmitteln (22) mit einem flexiblen Stab (92), der mit seinem unteren Ende an den Sockelmitteln montiert ist, und
- Flaggen-Auslösemitteln (16), die schwenkbar am entgegengesetzten Endbereich der Haltemittel (14) montiert sind und aufweisen: Stab-Eingriffsmit tel (68), die dazu eingerichtet sind, ein entgegengesetztes Ende (22a) des Stabes (92) zu berühren, wenn er sich in einem gebogenen Zustand befindet, und Verlängerungsmittel (130), die mit einem Ende gelenkig mit den Flaggen-Auslösemitteln und mit dem anderen Ende gelenkig mit dem Hebel (140) verbunden sind, wodurch eine Zugkraft auf die Schnur eine Drehung der Winde und des Hebels verursacht und folglich, über die Verlängerungsmittel (130), die Auslösemittel veranlaßt, das entgegengesetzte Ende (22a) des Stabes freizugeben.

14. Angelausrüstung nach Anspruch 13, bei der die Flaggen-Eingriffsmittel aus (a) einer Schwenkachse, die an ihrem einen Ende mit Oberflächenmitteln für die Anschlagberührung des entgegengesetzten Endes der Flagge versehen ist, und (b) einem Schaft besteht, der Mittel besitzt, die das eine Ende der Teleskopmittel aufnehmen.

15. Angelausrüstung nach Anspruch 14, bei der die Oberflächenmittel segmentförmig sind, wobei das entgegengesetzte Ende der Flagge an den segmentförmigen Oberflächenmitteln anliegt.

16. Angelausrüstung nach Anspruch 13, bei der das entgegengesetzte Ende der Haltemittel die Form eines Joches hat, in dem ein querverlaufender Stift angeordnet ist.

17. Ausrüstung nach Anspruch 16, bei der der Handgriff der Angelrute an seinem einen Ende Hakenmittel aufweist, die dazu eingerichtet sind, frei an dem querverlaufenden Stift aufgehängt zu werden.

18. Angelausrüstung nach Anspruch 13, die weiterhin lösbare Zapfenmittel zum in Eingriff Bringen des einen Endes der Haltemittel an dem Sockel aufweist.

19. Angelausrüstung nach Anspruch 13, die weiterhin Mittel aufweist, die dazu eingerichtet sind, an dem Sockel montiert zu werden, um das untere Ende der Flaggenmittel aufzunehmen.

## Revendications

1. Un équipement de pêche à la ligne comprenant, en combinaison:
- un socle (12) susceptible de rester, en service, sur une surface de support, ledit socle comprenant une partie avant et une partie arrière;
- un montant (14) monté, en service, sur ladite partie avant dudit socle (12), et comprenant une partie supérieure s'étendant en biais vers l'arrière et définissant un point de pivotement sur ledit montant;
- une canne à pêche (18, 20) susceptible de basculer et montée, en service, audit point de pivotement et définissant une première et une deuxième partie de part et d'autre dudit point de pivotement, ladite première partie comportant une canne (84) supportant une ligne (88); ladite deuxième partie comportant une poignée (18) et un moulinet de ligne (76); ladite canne comportant en outre des moyens pour le montage de ladite partie supérieure sur ledit point de pivotement;
- un fanion (22), comportant une hampe flexible (92) dont une extrémité inférieure est montée sur la partie arrière dudit socle;
- des moyens (24) situés à ladite partie arrière dudit socle (12) pour recevoir l'extrémité inférieure de ladite hampe flexible (92) et également pour supporter ladite deuxième partie (18) de la canne à pêche; et
- des moyens de déclenchement (16) montés de façon pivotante sur ledit montant (14), lesdits moyens de déclenchement (16) comportant des moyens (64) d'engagement de ligne et des moyens (68) d'engagement de fanion susceptibles de venir en contact avec une extrémité opposée (22a) de ladite hampe flexible (92), lors de sa flexion, de sorte qu'une force de traction exercée sur ladite ligne provoque le pivotement desdits moyens de déclenchement pour libérer ainsi l'extrémité opposée de ladite hampe flexible.

2. Un équipement de pêche à la ligne selon la revendication 1, dans lequel lesdits moyens de déclenchement (16) comprennent un corps présentant:
a) un axe de pivotement (66) présentant à l'une de ses extrémités, une surface susceptible de venir en contact de butée avec ladite extrémité opposée de ladite hampe (92); et
b) une tige dont une extrémités est monobloc avec ledit axe et dont l'extrémité opposée (64) reçoit librement ladite ligne (88); ladite ligne (88) étant libérée de ladite extrémité opposée lorsque la force de traction exercée sur ladite ligne libère ledit contact de butée, de manière à provoquer le déplacement de pivotement dudit axe et à libérer ladite extrémité opposée de ladite hampe de ladite surface.

3. Un équipement de pêche à la ligne selon la revendication 2, dans lequel ladite surface est segmentée, ladite extrémité opposée de ladite hampe venant en contact avec ladite surface segmentée.

4. Un équipement de pêche à la ligne selon la revendication 2 ou 3, dans lequel ladite tige est en forme de T.

5. Un équipement de pêche à la ligne selon la revendication 2, dans lequel lesdits moyens de déclenchement sont montés à la base de ladite partie supérieure oblique dudit montant.

6. Un équipement de pêche à la ligne selon la revendication 5, dans lequel la partie supérieure oblique présente la forme d'un étrier.

7. Un équipement de pêche à la ligne selon la revendication 6, dans lequel ledit point de pivotement est composé d'un axe transversal qui s'étend dans la partie supérieure dudit étrier.

8. Un équipement de pêche à la ligne selon la revendication 6 ou 7, comprenant en outre un ergot transversal dans ledit étrier pour y recevoir ladite ligne s'étendant entre ledit moulinet et lesdits moyens de déclenchement.

9. Un équipement de pêche à la ligne selon la revendication 7, dans lequel lesdits moyens pour le montage de ladite partie supérieure sur ledit point de pivotement de ladite canne à pêche comprennent un élément en forme de C qui reçoit intérieurement ledit axe transversal.

10. Un équipement de pêche à la ligne selon la revendication 1, comprenant, à ladite partie arrière dudit socle, un support amovible adapté à recevoir l'extrémité inférieure de ladite hampe flexible.

11. Un équipement de pêche à la ligne selon la revendication 10, dans lequel ledit support comprend des moyens pour recevoir une extrémité arrière dudit manche de la canne à pêche.

12. Un équipement de pêche à la ligne selon la revendication 1, comprenant en outre des moyens amovibles de pivotement adaptés pour venir engager avec l'extrémité inférieure dudit montant dans la partie avant dudit socle.

13. Un équipement de pêche à la ligne adjacent à un trou découpé dans une surface de glace, comprenant, en combinaison:
- un socle (12) susceptible de rester, en service, sur ladite surface de glace;
- un support (14) dont l'une des extrémité est montée, en service, sur ledit socle (12) et dont l'extrémité opposée est susceptible de s'étendre au-dessus dudit trou;
- une canne à pêche suspendue, en service, à ladite extrémité opposée dudit support, et s'étendant vers le bas à travers ledit trou, ladite canne comprenant une tige (84) supportant une ligne (88), un moulinet rotatif de ligne (76) et un manche (18); ledit moulinet de ligne (76) comportant un levier à actionnement manuel (140);
- un fanion (22) comprenant une hampe flexible (92) dont une extrémité inférieure est montée sur ledit socle; et
- des moyens de déclenchement de fanion (16) montés de façon pivotante à ladite partie d'extrémité opposée dudit support (14), lesdits moyens de déclenchement (16) comprenant:
- des moyens d'engagement de hampe (68) susceptibles de venir en contact avec une extrémité opposée (22a) de ladite hampe (92) quand cette dernière est dans un état de flexion; et
- des moyens d'extension (130) dont une des extrémités est reliée de façon pivotante auxdits moyens de déclenchement de fanion et dont l'autre extrémité est reliée de façon pivotante audit levier (140), de sorte qu'une force de traction exercée sur ladite ligne provoque la rotation dudit moulinet et dudit levier avec, par conséquent, la libération par lesdits moyens de déclenchement et via lesdits moyens d'extension (130), de ladite extrémité opposée (22a) de ladite hampe.

14. Un équipement de pêche à la ligne selon la revendication 13, dans lequel lesdits moyens d'engagement de fanion comprennent (a) un axe de pivotement présentant à l'une de ses extrémités une surface susceptible de venir en contact de butée avec ladite extrémité opposée dudit fanion et (b) une tige présentant des moyens recevant ladite extrémité desdits moyens télescopiques.

15. Un équipement de pêche à la ligne selon la revendication 14, dans lequel ladite surface est segmentée, ladite extrémité opposée dudit fanion venant en contact avec ladite surface segmentée.

16. Un équipement de pêche à la ligne selon la revendication 13, dans lequel ladite extrémité opposée dudit support présente la forme d'un étrier qui incorpore un axe transversal.

17. Un équipement selon la revendication 16, dans lequel ledit manche de ladite canne à pêche comprend , à l'une de ses extrémités, un crochet susceptible d'être librement suspendus à partir dudit axe transversal.

18. Un équipement de pêche à la ligne selon la revendication 13, comprenant en outre des moyens de pivotement amovibles pour l'engagement de ladite extrémité du support dans le socle.

19. Un équipement de pêche à la ligne selon la revendication 13, comprenant en outre des moyens susceptibles d'être montés sur ledit socle pour recevoir l'extrémité inférieure dudit fanion.
